# EUROPÄISCHE PATENTSCHRIFT

(11) **EP 2 398 634 B1**
(45) Veröffentlichungstag und Bekanntmachung des Hinweises auf die Patenterteilung: **15.05.2013**
(21) Anmeldenummer: 10703659.2
(22) Anmeldetag: 16.02.2010
(51) Int. Cl.: B29C 49/64

(54) **PREFORMHEIZUNG MITTELS GAS, VERFAHREN UND VORRICHTUNG**
PREFORM HEATER USING GAS, METHOD, AND APPARATUS
CHAUFFAGE DE PRÉFORME, PROCÉDÉ ET DISPOSITIF

(30) Priorität: 20.02.2009 DE 102009009867
(43) Veröffentlichungstag der Anmeldung: 28.12.2011
(73) Patentinhaber: Krones AG, 93073 Neutraubling (DE)
(72) Erfinder: LINDNER, Peter, 84085 Langquaid (DE)
(74) Vertreter: Bittner, Bernhard
(86) Internationale Anmeldenummer: PCT/EP2010/051884
(87) Internationale Veröffentlichungsnummer: WO 2010/094664

(56) Entgegenhaltungen:
- FR-A- 738 633
- US-A- 3 554 506
- US-A- 3 930 790
- US-A- 4 923 395

## Beschreibung

Die vorliegende Erfindung betrifft eine Vorrichtung zum Herstellen und Behandeln von aus Kunststoff bestehenden Vorformlingen, gemäß dem Oberbegriff des Patentanspruches 1, sowie ein Verfahren zum Herstellen und Behandeln von aus Kunststoff bestehenden Vorformlingen, gemäß dem Oberbegriff des Patentansruches 7. Vorformlingen Neben dem Begriff Vorformling wird im Folgenden auch der Begriff Preform verwendet.

In der Verpackungstechnik nimmt die Bedeutung so genannter PET-Flaschen im Bereich der Kunststoffbehälter seit Jahren zu. Derartige PET-Flaschen werden mittels eines thermischen Verfahrens aus einer so genannten PET-Preform bzw. Vorformling hergestellt und bearbeitet, wobei die PET-Preform die spritzgegossene Vorform der PET-Flasche darstellt.

Gattungsgemäße Vorrichtungen weisen dabei mindestens eine Heizeinrichtung zum Erwärmen der Preforms bzw. Vorformlinge auf, welcher eine Blasstation zum Expandieren der erwärmten Vorformlinge nachgeschaltet ist, sowie eine Transportvorrichtung, welche die Vorformlinge durch die Heizeinrichtung transportiert. Die Heizstation und die Blasstation werden dabei lückenlos mit Vorformlingen bestückt und arbeiten idealerweise mit maximaler Leistung und maximalem Wirkungsgrad. Dabei ist der konstruktive Aufwand sowie der Energiebedarf bekannter Vorrichtungen nicht unerheblich. Die üblicherweise in den Heizstationen eingesetzten Elektroheizelemente weisen darüber hinaus den Nachteil auf, dass sie vergleichsweise lange Zeit benötigen,

Solche Vorrichtungen und Verfahren werden in FR 73863 US 4923395 und US 3554506 offenbart. um an der zu bearbeitenden Stelle eines Vorformlings präzise eine gewünschte Temperatur zu erzielen.

Demzufolge liegt der vorliegenden Erfindung die Aufgabe zugrunde, eine Vorrichtung und ein Verfahren zur Verfügung zu stellen, mit deren Hilfe die Erwärmung derartiger Kunststoffbehälter derart erleichtert wird, dass jeweils eine Vielzahl von Behältern gleichzeitig und schnell erwärmbar bzw. abkühlbar ist und der Energieaufwand zur Erwärmung vergleichsweise gering gehalten wird.

Die Aufgabe wird mit einer Vorrichtung und mit einem Verfahren nach den Ansprüchen 1 und 7 gelöst.

Ein wesentlicher Punkt der Erfindung liegt darin, dass die erfindungsgemäße Vorrichtung zum Herstellen und Behandeln von aus Kunststoff bestehenden Behältern, insbesondere Vorformlingen, enthaltend mindestens eine Heizeinrichtung zum Erwärmen der Vorformlinge mit wenigstens einer Wärme abgebenden Energiequelle, einer nachgeschalteten Blasstation zum Expandieren der erwärmten Vorformlinge und einer Transportvorrichtung, welche die Vorformlinge durch die Heizeinrichtung entlang eines Transportweges transportiert, ein mit Gas betriebenes Heizelement aufweist. Dabei weist das Heizelement vorzugsweise mindestens einen Gasbrenner auf. Vorteilhafterweise werden kontinuierlich geregelte Brenner eingesetzt.

Ein weiterer Vorteil der erfindungsgemäßen Vorrichtung besteht darin, dass Gas oftmals für den Betreiber einer derartigen Vorrichtung zu wesentlich günstigeren Bedingungen zur Verfügung steht als elektrischer Strom.

Entsprechend den zur Bearbeitung von Vorformlingen erforderlichen Temperaturen, üblicherweise < 140° C, ist der Gasbrenner dabei zur flammlosen Verbrennung von gasförmigen Kohlenwasserstoffen geeignet. Dabei kann beispielsweise Flüssiggas verwendet werden, wobei die Dampfphase aus einem Flüssiggaslagerbehälter direkt abgezogen und dem Brenner zugeleitet wird. Dieser Flüssiggaslagerbehälter kann dabei Bestandteil der Bearbeitungsanlage sein. Daneben ist auch die Verwendung von Erdgas denkbar, wobei hier die Brennstofflagerung entfällt.

Bevorzugt ist die Temperatur der Vorformlinge bei der Erwärmung in einem Zeitraum von 1 bis 10 s über wenigstens mehrere Grad Celsius veränderbar. Damit weist das mit Gas betriebene Heizelement den erheblichen Vorteil auf, dass steile Temperaturgradienten gefahren werden können.

Besonders bevorzugt weist die Heizeinrichtung neben dem mindestens einen mit Gas betriebenen Heizelement eine weitere, davon verschiedenartige Energiequelle auf. So kann dadurch, beispielsweise durch ein elektrisches Heizelement, eine Basiswärme bereitgestellt werden und mit dem Gasbrenner gezielt die Endparameter am Vorformling erreicht werden oder umgekehrt, d.h. es wäre auch möglich, über die gasbetriebene Heizung eine gewisse Grundwärme herzustellen und mit einer anderen Energiequelle die Endparameter am Preform einzustellen. Damit wird sowohl eine energiesparende als auch eine deutlich lokalisierte Erwärmung der zu bearbeitenden Vorformlinge erreicht.

Vorzugsweise kann das mit Gas betriebene Heizelement derart in der Heizeinrichtung der Bearbeitungsanlage angeordnet sein, dass es sowohl zur direkten und/oder indirekten Erwärmung der Behälter geeignet ist. Damit kann die im Gasbrenner erzeugte Wärme entweder direkt am Vorformling genutzt werden oder diesem über ein zwischengeschaltetes Element über Abstand indirekt zugeführt werden. Daher eignet sich die erfindungsgemäße Heizvorrichtung sowohl für eine direkte als auch für eine indirekte Beheizung des Vorformlings.

Besonders bevorzugt ist das mit Gas betriebene Heizelement seitlich und/oder unterhalb des Transportweges der mittels der Transporteinrichtung transportierten Behälter angeordnet. Damit wird vorteilhafterweise eine Erwärmung des Gewindebereiches des Vorformlings vermieden.

Vorteilhaft ist im Bereich der das mit Gas betriebene Heizelement enthaltenden Heizeinrichtung eine Luftbewegungseinrichtung angeordnet. Damit wird eine rasche Verteilung der vom Gasbrenner erzeugten Wärme innerhalb der Heizeinrichtung gewährleistet. Bei der Luftbewegungseinrichtung kann es sich beispielsweise um einen Ventilator handeln.

Ein weiterer wesentlicher Punkt der Erfindung liegt in der Bereitstellung eines Verfahrens zum Herstellen und Behandeln von aus Kunststoff bestehenden Behältern, insbesondere Vorformlingen, mit mindestens einer wärmeabgebenden Energiequelle, wobei die Behälter mit einer die Energiequelle enthaltenen Heizeinrichtung erwärmt werden und mit einer Transportvorrichtung durch die Heizeinrichtung transportiert werden, wobei die Behälter mit einem mit Gas betriebenen Heizelement erwärmt werden.

Dabei erfolgt die Erwärmung der Behälter nach Einschalten des Heizelements vorzugsweise mit Temperaturengradienten von wenigstens 5° C/s.

Gleichermaßen erfolgt die Abkühlung der Behälter nach Ausschalten des Heizelementes mit Temperaturgradienten von wenigstens 5° C/s.

Vorzugsweise wird zur Erwärmung der Behälter mindestens ein Gas verbrannt.

Vorteile und Zweckmäßigkeiten sind der nachfolgenden Beschreibung in Verbindung mit der Zeichnung zu entnehmen. Hierbei zeigt:

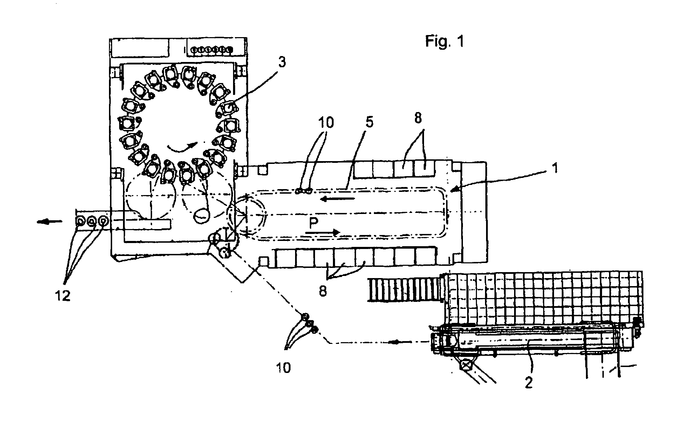

- Fig. 1: die schematische Draufsicht auf eine in einer Streckblasmaschine enthaltenen Heizeinrichtung.

Die Streckblasmaschine nach Fig. 1 besitzt eine Vielzahl von Blasstationen 3, welche jeweils an einem kontinuierlich antreibbaren Blasrad angeordnet sind und eine diesen Blasstationen vorgeschaltete Heizeinrichtung 1 mit einer in Pfeilrichtung kontinuierlich umlaufenden Transportvorrichtung 5 für die Vorformlinge sowie stationäre Heizelemente bzw. Gasbrenner 8. Das Bezugszeichen P kennzeichnet dabei den Transportpfad der Vorformlinge innerhalb der Heizeinrichtung. Dabei ist es möglich, dass die einzelnen Vorformlinge 10 mit Greifelementen gegriffen werden und aufrecht durch die Heizeinrichtung 1 gefördert werden. Die einzelnen Heizelemente 8 sind dabei bevorzugt derart angeordnet, dass eine Mündung der Vorformlinge 10 nicht erwärmt wird.

Dabei sind die Heizelemente 8 bzw. Gasbrenner seitlich bzw. unterhalb des Transportweges P der mittels der Transporteinrichtung 5 transportierten Vorformlinge 10 angeordnet. Lediglich bei indirekter Erwärmung der Vorformlinge sind die Heizelemente 8 abseits des Transportbereiches der Vorformlinge 10 angeordnet. Bei einer Anordnung zur direkten Erwärmung ergibt sich vorteilhaft eine außerordentlich schnelle Reaktionszeit, wobei gezielt einzelne Zonen des zu bearbeitenden Vorformlings 10 erwärmt werden können. Dies geht mit einer Verminderung des Energieverbrauchs innerhalb der gesamten Streckblasmaschine einher. Die einzelnen Heizelemente sind hier ausserhalb des Transportpfads P dargestellt.

Es wäre jedoch auch möglich, Heizelemente 8 auch innerhalb des Transportpfads anzuordnen. Auch wäre es möglich, Brenner vorzusehen, welche mehrere Heizelemente 8 betreiben, wobei je nach Bedarf ein Strom an erwärmter Luft an bestimmte Bereich der Vorformlinge gelenkt werden kann.

Das Bezugszeichen 2 bezieht sich auf eine Sortiereinheit, welche die Vorformlinge sortiert, damit diese in der gleichen Orientierung in die Heizeinrichtung 1 gelangen. In der Heizeinrichtung 1 werden dabei die Vorformlinge 10 vereinzelt geführt. Die einzelnen Heizelemente 8 sind vorteilhaft unabhängig voneinander steuerbar. Das Bezugszeichen 12 bezieht sich auf die bereits fertig geblasenen Behältnisse.

## Patentansprüche

1. Vorrichtung zum Herstellen und Behandeln von aus PET - Kunststoff bestehenden Vorformlingen (10), enthaltend mindestens eine Heizeinrichtung (1) zum Erwärmen der Vorformlinge (10) mit wenigstens einer Wärme abgebenden Energiequelle, einer nachgeschalteten Blasstation (3) zum Expandieren der erwärmlen Vorformlinge (10), und einer Transportvorrichtung (5), welche die Vorformlinge (10) entlang eines Transportweges (P) durch die Heizeinrichtung (1) transporttiert,
wobei die Energiequelle (1) ein mit Gas betriebenes Heizelemente aufweist, **dadurch gekennzeichnet, dass** das Heizelement mindestens einen Gasbrenner aufweist, welcher zur flammlosen Verbrennung von gasförmigen Kohlenwasserstoffen geeignet ist.

2. Vorrichtung nach Anspruch 1,
**dadurch gekennzeichnet, dass**
die Temperatur der Vorformlinge (10) in einem Zeitraum von 1-10 s überwenigstens mehrere °C veränderbar ist.

3. Vorrichtung nach einem der Ansprüche 1-2,
**dadurch gekennzeichnet, dass**
die Heizeinrichtung (1) neben dem mindestens einen mit Gas betriebenen Heizelement eine weitere, davon verschiedenartige Energiequelle aufweist.

4. Vorrichtung nach einem der Anspruche 1-3,
**dadurch gekennzeichnet, dass**
das mit Gas betriebene Heizelement derart angeordnet ist, dass es zur direkten oder indirekten Erwärmung der Vorformlinge (10) geeignet ist.

5. Vorrichtung nach einem der Ansprüche 1-4,
**dadurch gekennzeichnet, dass**
das mit Gas betriebene Heizelement seitlich und/oder unterhalb des Transportweges (P) der mittels der Transporteinrichtung (5) transportierten Vorformlinge (10) angeordnet ist

6. Vorrichtung nach einem der Ansprüche 1-5,
**dadurch gekennzeichnet, dass**
im Bereich der das mit Gas betriebene Heizelement enthaltenden Heizeinrichtung (1) eine Luftbewegungseinrichtung angeordnet ist.

7. Verfahren zum Herstellen und Behandeln von aus PET - Kunststoff bestehenden Vorformlingen (10), mit mindestens einer Wärme abgebenden Energiequelle, wobei die Vorformlinge (10) mit einer die Energiequelle enthaltenden Heizeinrichtung (1) erwärmt werden und mit einer Transportvorrichtung durch die Heizeinrichtung (1) transportiert werden,
wobei
die Vorformlinge (10) mit einem mit Gas betriebonem Heizelement erwärmt werden, **dadurch gekennzeichnet**, das Heizelement mindestens einen Gasbrenner aufweist, welcher gasförmigen Kohlenwasserstoffe flammlos verbrennt.

8. Verfahren nach Anspruch 7,
**dadurch gekennzeichnet, dass**
die Erwärmung der Vorformlinge (10) nach Einschalten des Heizelementes mit Temperaturgradienten von wenigstens 5 °C/s erfolgt.

9. Verfahren nach Anspruch 7 oder 8,
**dadurch gekennzeichnet, dass**
die Abkühlung der Vorformlinge nach Ausschalten des Heizelementes mit Temperaturgradienten von wenigstens 5 °C/s erfolgt.

10. Verfahren nach Anspruch 7 - 9,
**dadurch gekennzeichnet, dass**
zur Erwärmung der Vorformlinge (10) mindestens ein Gas verbrannt wird.

## Claims

1. An apparatus for the production and treatment of pre-forms (10), consisting of PET-plastics material, containing at least one heating device (1) for heating the pre-forms (10) and with at least one energy source emitting heat, a blowing station (3) arranged downstream for expanding the heated pre-forms (10), and a conveying apparatus (5) which conveys the pre-forms (10) along a conveying path (P) through the heating device (1), wherein the energy source (1) has a heating element operated with gas, **characterized in that** the heating element has at least one gas burner, that is suitable for the flameless combustion of gaseous hydrocarbons.

2. An apparatus according to claim 1, **characterized in that** the temperature of the pre-forms (10) is capable of being varied over at least several °C within a period of from 1 to 10 s.

3. An apparatus according to any one of claims 1 to 2, **characterized in that** the heating device (1) has, in addition to the at least one heating element operated with gas, a further energy source which is different therefrom.

4. An apparatus according to any one of claims 1 to 3, **characterized in that** the heating element operated with gas is arranged in such a way that it is suitable for direct or indirect heating of the pre-forms (10).

5. An apparatus according to any one of claims 1 to 4, **characterized in that** the heating element operated with gas is arranged at the side of and/or below the conveying path (P) of the pre-forms (10) conveyed by means of the conveying device (5).

6. An apparatus according to any one of claims 1 to 5, **characterized in that** an air movement device is arranged in the region of the heating device (1) which contains the heating element operated with gas.

7. A method for the production and treatment of pre-forms (10), consisting of PET-plastics material, with at least one energy source emitting heat, wherein the pre-forms (10) are heated with a heating device (1) containing the energy source and are conveyed by a conveying apparatus through the heating device (1), wherein the pre-forms (10) are heated by a heating element operated with gas, **characterized in that** the heating element has at least one gas burner, that combusts gaseous hydrocarbons flameless.

8. A method according to claim 7, **characterized in that** the heating of the pre-forms (10) is carried out after the heating element is switched on at temperature gradients of at least 5°C/s.

9. A method according to claim7 or 8, **characterized in that** the cooling of the pre-forms is carried out after the heating element is switched off at temperature gradients of at least 5°C/s.

10. A method according to claims 7 - 9 , **characterized in that** at least one gas is burnt in order to heat the pre-forms (10).

## Revendications

1. Installation pour la fabrication et le traitement de préformes (10) en matière synthétique PET, comprenant au moins un dispositif de chauffe (1) pour le chauffage des préformes (10) avec au moins une source d'énergie délivrant de la chaleur, une station de soufflage (3) consécutive pour l'expansion des préformes (10) chauffées, et un système de transport (5) qui transporte les préformes (10) le long d'un chemin de transport (P) traversant le dispositif de chauffe (1), la source d'énergie (1) comportant un élément de chauffe fonctionnant au gaz, **caractérisée**
**en ce que**
l'élément de chauffe est pourvu d'au moins un brûleur à gaz, lequel est prévu pour la combustion sans flamme d'hydrocarbures gazeux.

2. Installation selon la revendication 1,
**caractérisée**
**en ce que** la température des préformes (10) est variable d'au moins plusieurs °C pendant un intervalle de temps de 1 à 10 s.

3. Installation selon l'une des revendications 1 ou 2,
**caractérisée**
**en ce qu'**en plus de l'élément ou des éléments de chauffe fonctionnant au gaz, le dispositif de chauffe (1) comporte une autre source d'énergie, différente de celle susmentionnée.

4. Installation selon l'une des revendications 1 à 3,
**caractérisée**
**en ce que** l'élément de chauffe fonctionnant au gaz est disposé de manière à être approprié pour le chauffage direct ou indirect des préformes (10).

5. Installation selon l'une des revendications 1 à 4,
**caractérisée**
**en ce que** l'élément de chauffe fonctionnant au gaz est disposé sur le côté et/ou en dessous du chemin de transport (P) des préformes (10) transportées au moyen du dispositif de transport (5).

6. Installation selon l'une des revendications 1 à 5,
**caractérisée**
**en ce qu'**un dispositif de déplacement d'air est disposé au niveau du dispositif de chauffe (1) comprenant l'élément de chauffe fonctionnant au gaz.

7. Procédé de fabrication et de traitement de préformes (10) en matière synthétique PPT, avec au moins une source d'énergie délivrant de la chaleur, les préformes (10) étant chauffées par un dispositif de chauffe (1) comprenant la source d'énergie et transportées par un système de transport (5) au travers du dispositif de chauffe (1), les préformes (10) étant chauffées par un élément de chauffe fonctionnant au gaz,
**caractérisé**
**en ce que** l'élément de chauffe est pourvu d'au moins un brûleur à gaz, lequel effectue la combustion sans flamme d'hydrocarbures gazeux.

8. Procédé selon la revendication 7,
**caractérisé**
**en ce que** le chauffage des préformes (10) est effectué après activation de l'élément de chauffe, avec des gradients de température d'au moins 5 °C/s.

9. Procédé selon la revendication 7 ou la revendication 8,
**caractérisé**
**en ce que** le refroidissement des préformes est effectué après désactivation de l'élément de chauffe, avec des gradients de température d'au moins 5 °C/s.

10. Procédé selon les revendications 7 à 9,
**caractérisé**
**en ce qu'**au moins un gaz est brûlé pour le chauffage des préformes (10).
